# EUROPÄISCHE PATENTSCHRIFT

(11) **EP 0 799 397 B1**
(45) Veröffentlichungstag und Bekanntmachung des Hinweises auf die Patenterteilung: **06.10.1999**
(21) Anmeldenummer: 95929760.7
(22) Anmeldetag: 02.09.1995
(51) Int. Cl.: F16L 55/165, F16L 11/02, B32B 5/26

(54) **VERFAHREN ZUR HERSTELLUNG EINES SCHLAUCHES ZUR INNENAUSKLEIDUNG VON ROHRLEITUNGEN, KANÄLEN OD. DGL.**
PROCESS FOR PRODUCING A FLEXIBLE TUBE FOR LINING PIPES, CHANNELS OR THE LIKE
PROCEDE DE PRODUCTION D'UN FLEXIBLE SERVANT A GARNIR L'INTERIEUR DE CANALISATIONS, DE CANAUX OU SIMILAIRES

(30) Priorität: 21.12.1994 DE 4445605
(43) Veröffentlichungstag der Anmeldung: 08.10.1997
(73) Patentinhaber: SAERTEX Wagener GmbH & Co. KG, 48369 Saerbeck (DE)
(72) Erfinder: WAGENER, Gert, D-48282 Emsdetten (DE)
(74) Vertreter: Habbel, Hans-Georg, Dipl.-Ing.
(86) Internationale Anmeldenummer: DE9501208
(87) Internationale Veröffentlichungsnummer: WO9619693

(56) Entgegenhaltungen:
- EP-A- 0 392 026
- EP-A- 0 499 894
- WO-A-91/13559
- DE-C- 3 819 657

## Beschreibung

Die Erfindung bezieht sich auf ein Verfahren zur Herstellung eines Schlauches zur Innenauskleidung von Rohrleitungen, Kanälen ed. dgl. gemäß dem Oberbegriff des Hauptanspruches.

Ein gattungsbildendes Verfahren ist aus der DE 38 19 657 C1 bekanntgeworden, bei welchem zwischen aus Glasfaserfäden gebildeten Gewebebahnen oder Gewirkebahnen eine aus Glasfasern gebildete Filzmatte gelegt wird. Die Filzmatte wird dann mit den Gewebe- oder Gewirkebahnen in der Wirktechnik verbunden und aus dieser Kombinationsbahn wird ein Schlauch geformt. Hierbei können die Gewebe- oder Gewirkebahnen mit der Nadelfilzbahn durch Kaschieren verbunden sein und die Bahnränder können geschäftet sein und durch Nähen verbunden werden oder durch Verfilzen verbunden werden.

Aus der DE 38 19 657 ist es weiterhin bekannt, daß der gebildete Schlauch mit Kunstharz getränkt und in das zu sanierende Kanalrohr eingezogen wird, wobei der Schlauch dicht an die Rohrinnenwand angelegt und dann ausgehärtet wird. Das ausgehärtete Harz trägt dabei zur Festigkeit des Schlauches erheblich bei. Da Jas Harz aber nach der Imprägnierung nicht auslaufen darf und die Imprägnierung beispielsweise außerhalb des Kanales erfolgt und erst später der Schlauch in das zu sanierende Rohr eingezogen wird, hat man versucht, die Viskosität des Harzes zu erhöhen, indem man entsprechende Thixotropiemittel und/oder Eindickungsmittel zusetzte.

Diese Verfahrensweise hat aber den großen Nachteil, daß hierdurch die GeschwindigKeit der Imprägnierung erheblich gebremst wird und eine nicht vollständige Benetzung der einzelnen Fasern erfolgt, wobei weiterhin das Eindickungsmittel nicht sofort wirkt. Wird der gebildete Schlauch dann aufgewickelt oder gefaltet, wird das Harz aus den Faltbereichen herausgequetscht und es erfolgt keine gleichmäßige Imprägnierung über die ganze Länge des Schlauches gesehen. Auch wird die Imprägnierungsflotte verdickt, so daß sie nach kurzer Zeit unbrauchbar wird.

Der Erfindung liegt die Aufgabe zugrunde, hier Abhilfe zu schaffen, und es wird vorgeschlagen, daß die Imprägnierung durch Einsatz eines niedrig viskosen Harzes erfolgt, das sich sehr gut innerhalb des gesamten Sandwichgebildes verteilt, wobei insbesondere innerhalb des Nadelfilzes eine gute Verteilung erfolgt. Durch eine Vorgelierung der Außenschicht, z. B. mittels UV-Strahlung, wird erreicht, daß an der Außenschicht eine Sperrschicht gebildet wird, so daß das Harz nicht auslaufen kann.

Bei der späteren, innerhalb eines Kanales oder Rohres od. dgl. erfolgenden endgültigen Aushärtung garantiert diese Schicht eine Aushärtung auch in den an den kalten Kanal- oder Rohrwänden anliegenden Bereichen, die sonst im Stand der Technik aufgrund des Wärmeverlustes nicht ausreichend ausgehärtet werden können.

Gemäß einem weiteren, bevorzugten Vorschlag der Erfindung wird an der Innenseite des gebildeten Schlauches ein Vlies angeordnet, das eine zusätzliche Sperrschicht schafft und damit nach der Aushärtung eine harzreiche Zone. Diese harzreiche, ausgehärtete Zone ist besonders für aggressive und abrassive Medien wichtig.

Außerdem vertreibt das niedrig viskose Harz die Luft aus der gesamten Kombinationsmatte, d. h. dem Sandwichgebilde und die Vliesschicht entlüftet sich dabei sehr gut und intensiv.

Durch diese erfindungsgemäße Anordnung wird eine bessere Benetzung des Verstärkungsmaterials mit geringeren Drücken erreicht.

Durch die Anbringung eines Vlieses, das auch aufgeklebt sein kann, wird nach innen hin erreicht, daß eine schnellere Durchführung der Arbeit erfolgen kann und eine bessere Entlüftung der Räume erfolgt.

Während der Konfektion des Sandwichgebildes wird in das Innere des Gebildes eine Folie, vorzugsweise ein flachgelegter Folienschlauch eingelegt, der eine spätere Kalibrierung ermöglicht.

Der Einsatz des erfindungsgemäßen Sandwichgebildes ist in Abwasserkanälen von Vorteil. In gleicher Weise eignet sich das erfindungsgemäße Gebilde auch zur Auskleidung von allen möglichen Rohrsystemen, z. B. Druckleitungen, Industrieleitungen und Mikrotunnels.

Außerdem wird darauf hingewiesen, daß das erfindungsgemäße Sandwichprodukt weiterhin geeignet ist als Innenrohr eingesetzt zu werden, wobei zwischen dem Innenrohr und dem Außenrohr ein Kontrollzwischenraum geschaffen wird, der zum Anschluß entsprechender Meßgeräte geeignet ist, um Leckagen aus dem Innenrohr festzustellen.

## Patentansprüche

1. Verfahren zur Herstellung eines Schlauches zur Innenauskleidung von Rohrleitungen, Kanälen od. dgl., mit einer äußeren, aus Glasfaserfäden gebildeten Gewebe-, Gelege- oder Gewirkebahn, einer voluminösen Glasfaserproduktmatte und einer abdeckenden inneren, aus Glasfaserfäden gebildeten Gewebe-, Gelege- oder Gewirkebahn, wobei dann die so gebildete Kombinationsbahn zu einem Schlauch geformt und die Kombinationsbahnränder miteinander verbunden werden, dadurch gekennzeichnet, daß der fertige Schlauch mit einem eine niedrige Viskosität aufweisenden Harz getränkt wird und die Außenschicht vorgeliert wird, so daß das Harz nicht auslaufen kann.

2. Verfahren nach Anspruch 1, dadurch gekennzeichnet, daß die Vorgelierung des eine niedrige Viskosität aufweisenden Harzes durch UV-Bestrahlung erfolgt.

3. Verfahren nach Anspruch 1, dadurch gekennzeichnet, daß auf der Innenseite der Kombinationsbahn für den zu bildenden Schlauch eine Bahn aus Vlies aus synthetischen Fasern angeordnet wird.

4. Verfahren nach Anspruch 3, dadurch gekennzeichnet, daß das Vlies auf der nach innen gerichteten Seite der inneren Glasfasergewebe-, Glasfasergelege- oder Glasfasergewirkebahn festgelegt wird.

5. Verfahren nach Anspruch 4, dadurch gekennzeichnet, daß das Vlies auf der nach innen gerichteten Seite der inneren Glasfaserbahn durch Verkleben festgelegt wird.

6. Verfahren nach Anspruch 4, dadurch gekennzeichnet, daß das Vlies mit der nach innen gerichteten Seite der inneren Glasfaserbahn vernadelt wird.

## Claims

1. A process for producing a flexible tube for lining pipelines, conduits or the like, comprising an outer woven, laid or knitted web formed of glass fibre threads, a bulky glass fibre product mat and a woven, laid or knitted inner covering web formed of glass fibre threads, the combined web thus formed then being formed into a flexible tube and the combined web edges being connected together, characterised in that the finished flexible tube is impregnated with a low-viscosity resin and the outer layer is pregelled, such that the resin cannot drain out.

2. A process according to claim 1, characterised in that pregelling of the low-viscosity resin is effected by UV radiation.

3. A process according to claim 1, characterised in that a nonwoven synthetic fibre web is arranged on the inside of the combined web to be formed into the flexible tube.

4. A process according to claim 3, characterised in that the nonwoven fabric is fixed to the inwardly directed side of the inner woven, laid or knitted glass fibre web.

5. A process according to claim 4, characterised in that the nonwoven fabric is fixed to the inwardly directed side of the inner glass fibre web by bonding.

6. A process according to claim 4, characterised in that the nonwoven fabric is needle-punched together with the inwardly directed side of the inner glass fibre web.

## Revendications

1. Procédé de fabrication d'un tuyau flexible destiné à revêtir l'intérieur des canalisations, canaux ou éléments similaires, comprenant une bande extérieure textile, gélatineuse ou en tissu à mailles réalisée avec des fils en fibres de verre, un treillis volumineux en fibres de verre et une bande de revêtement intérieur textile, gélatineuse ou en tissu à mailles réalisée avec des fils en fibres de verre, la bande combinée ainsi réalisée étant formée ensuite pour réaliser un tuyau flexible et les bords de la bande combinée étant assemblés les uns avec les autres, caractérisé en ce que le tuyau flexible fini est imprégné d'une résine à faible viscosité et en ce que la couche extérieure subit une gélification préalable, de telle sorte que la résine ne peut pas s'écouler.

2. Procédé selon la revendication 1, caractérisé en ce que la gélification préalable de la résine à faible viscosité est réalisée à l'aide d'un rayonnement UV.

3. Procédé selon la revendication 1, caractérisé en ce qu'une bande en non-tissé, réalisée avec des fibres synthétiques, est disposée sur la face intérieure de la bande combinée destinée à former le tuyau flexible.

4. Procédé selon la revendication 3, caractérisé en ce que le non-tissé est fixé sur la face, orientée vers l'intérieur, de la bande intérieure textile en fibres de verre, gélatineuse en fibres de verre ou en tissu à mailles avec fibres de verre.

5. Procédé selon la revendication 4, caractérisé en ce que le non-tissé est fixé par collage sur la face, orientée vers l'intérieur, de la bande intérieure en fibres de verre.

6. Procédé selon la revendication 4, caractérisé en ce que le non-tissé est fixé par des aiguilles contre la face, orientée vers l'intérieur, de la bande intérieure en fibres de verre.
